# EUROPÄISCHE PATENTSCHRIFT

(11) **EP 3 296 721 B1**
(45) Veröffentlichungstag und Bekanntmachung des Hinweises auf die Patenterteilung: **03.11.2021**
(21) Anmeldenummer: 17191607.5
(22) Anmeldetag: 18.09.2017
(51) Int. Cl.: G01N 21/84, G01N 21/95, G01N 21/896

(54) **VERFAHREN UND VORRICHTUNG ZUM ZERSTÖRUNGSFREIEN BESTIMMEN EINES LAMINIERTEN ZUSTANDS EINER ANORDNUNG VON LAMINIERTEN KUNSTSTOFFFOLIENSCHICHTEN FÜR EINEN KUNSTSTOFFKARTENKÖRPER**
METHOD AND DEVICE FOR THE NON DESTRUCTIVE DETECTION OF A LAMINATED CONDITION OF AN ARRANGEMENT OF LAMINATED PLASTIC FOIL LAYERS FOR A PLASTIC CARD BODY
PROCÉDÉ ET DISPOSITIF DE DÉTERMINATION DE MANIÈRE NON DESTRUCTIVE D'UN ÉTAT DE STRATIFICATION D'UN ENSEMBLE DE FEUILLES EN MATIÈRE PLASTIQUE STRATIFIÉES POUR UN CORPS DE CARTES EN MATIÈRE PLASTIQUE

(30) Priorität: 19.09.2016 DE 102016117591
(43) Veröffentlichungstag der Anmeldung: 21.03.2018
(73) Patentinhaber: Bundesdruckerei GmbH, 10969 Berlin (DE)
(72) Erfinder: Wilke, Andreas, 13509 Berlin (DE); Dressel, Olaf, 14641 Wustermark (DE)
(74) Vertreter: Bittner, Thomas L.

(56) Entgegenhaltungen:
- WO-A1-01/27587
- US-A- 4 715 718
- US-A1- 2005 259 326

## Beschreibung

Die Erfindung betrifft ein Verfahren und eine Vorrichtung zum zerstörungsfreien Bestimmen eines laminierten Zustands einer Anordnung von laminierten Kunststofffolienschichten für einen Kunststoffkartenkörper, insbesondere für eine Chipkarte.

### Hintergrund

Beim Herstellen von Körpern für Kunststoffkarten werden üblicherweise mehrere Schichten von Kunststofffolien aufeinander laminiert. Der so hergestellte Körper kann für Kunststoffkarten in unterschiedlicher Ausprägung verwendet werden, wozu zum Beispiel Identitätskarten oder Ausweiskarten gehören, sei es mit oder ohne integrierten Chip.

In dem Dokument DE 10 2009 011 167 A1 sind Haftklebemassen beschrieben, die für das Verkleben der Kunststofffolien beim Laminieren zum Einsatz kommen können. Im Dokument EP 1 334 820 A2 ist ein Pressstempel für eine Laminierpresse und dessen Verwendung beschrieben. Ein Ober- und ein Unterstempel sind mit beheizbaren Pressflächen versehen, um die übereinander gestapelten Kunststoffschichten zu laminieren.

Um nach der Herstellung für den Einsatz als Kunststoffkarte geeignet zu sein, ist es erforderlich, dass der hergestellte Körper über eine ausreichende Laminierqualität verfügt. Insbesondere ist zu vermeiden, dass Teilbereiche der gestapelten Kunststofffolienschichten unzureichend oder nicht laminiert sind. Um laminierte Schichtanordnungen als geeigneten Körper für eine Kunststoffkarte oder Ausschuss zu qualifizieren, ist es bekannt, die Laminierqualität mittels eines Delaminationstests zu bestimmen. Bei den Delaminationstest wird die Kraft bestimmt, die nötig ist, um die laminierten Folien wieder voneinander zu trennen. Hierbei wird der zuvor laminierte Körper wieder zerstört. Darüber hinaus ist der Delaminationstest zeitaufwendig und hängt von dem händischen Geschick des Testers ab, wodurch das Verfahren hinsichtlich der Genauigkeit zwischen Anwendern zusätzlich schwankt.

Das Dokument DE 10 2007 043 408 A1 betrifft ein Verfahren und eine Vorrichtung zur Detektion von Trägerfolienresten oder Trägerfolienfehlstellen sowie eine Applikationsmaschine mit einer solchen Vorrichtung. Ein Substrat und die applizierte Übertragungslage einer applizierten Transferfolie oder eine Laminierfolie umfassender Mehrschichtkörper oder die abgezogene Trägerfolie wird mit Licht einer Lichtquelle bestrahlt. Ein von einem Bereich des Mehrschichtkörpers reflektierter oder durch einen Bereich des Mehrschichtkörpers bzw. der abgezogenen Trägerfolie transmittierter Anteil des Lichts wird von einem ersten Sensor erfasst. Mindestens ein Polarisator wird in den Strahlengang des Lichts zwischen geordnet. Eine mit dem ersten Sensor verbundene Auswerteelektronik vergleicht ein von dem ersten Sensor generiertes Signal mit einem Referenzwert und bestimmt, basierend auf diesem Vergleich, ob der Bereich als ein einen Transferfolienrest bzw. eine Trägerfolienfehlstelle aufweisender Bereich des Mehrschichtkörpers einzuordnen ist.

Das Dokument DE 10 2010 061 559 A1 betrifft eine Vorrichtung zum Erkennen von Folienverarbeitungsfehlern, mit einer ersten Fehlererkennungsvorrichtung zum Feststellen eines Folienfehlers eines Folienbereichs vor einer Verarbeitung einer Folie, einer zweiten Fehlererkennungsvorrichtung zum Feststellen eines Verarbeitungsfehlers des verarbeiteten Folienbereichs und einer Erfassungsvorrichtung zum Erfassen eines auf einem Folienfehler beruhenden Verarbeitungsfehlers, wenn für den Folienbereich sowohl ein Folienfehler als auch ein Verarbeitungsfehler festgestellt ist.

Das Dokument DE 103 01 931 A1 betrifft ein Verfahren und eine Anordnung zur automatischen optischen Kontrolle von farblich gemusterten Oberflächen, welche mit einer transparenten, ebenen oder geprägten Schutzschicht versehen sind. Typische Vertreter solcher Oberflächen sind Laminatbodenelemente. Zusätzlich zu den bekannten Verfahren, welche mit Farbkameras die Farbmusterung prüfen und mit s/w Kameras, welche in spiegelnder Reflexion die Oberfläche der Schutzschicht prüfen, werden durch Verwendung einer kurzwelligen Beleuchtung Fehler im Innern der Schutzschicht anhand der zu kürzenden Wellenlängen stark ansteigenden Streuung sowie bei fluoreszierenden Schutzschichten ebenfalls anhand von Änderungen in der Fluoreszenz der Schutzschicht bildgebend erfasst.

Das Dokument CH 701418 A1 betrifft ein Verfahren zum Prüfen von laminierten Schichtkörpern mit mindestens einer äußeren transparenten Schicht auf unerwünschte Einschlüsse, insbesondere Gas- und / oder Vakuumeinschlüsse.

Das Dokument DE 10 2012 111 651 A1 betrifft ein Verfahren und eine Vorrichtung zum Prüfen der Vollständigkeit eines Auftrags von einer transparenten Schicht eines Mediums auf einem Trägermaterial, bei dem auf eine Auftragswalze eine Schicht des Mediums aufgebracht wird, bei dem durch die Auftragswalze die Schicht des Mediums auf das zu beschichtende Trägermaterial aufgebracht wird, bei dem während oder nach dem Aufbringen der Schicht des Mediums auf die Auftragswalze eine Oberflächenstruktur in die Schicht des Mediums eingebracht wird und bei dem vor dem Aufbringen der Schicht des Mediums von der Auftragswalze auf das Trägermaterial die Oberflächenstruktur der Schicht mit einer Bilderfassungseinrichtung erfasst und mit einer Auswerteeinrichtung ausgewertet wird.

Aus dem Dokument WO 01 / 27587 A1 ist eine Vorrichtung zum automatischen Analysen von kontaktlosen Smartcards bekannt. Es ist vorgesehen, in den hergestellten Karten die Lage von internen Komponenten wie Antennenschleife und IC-Schaltung mittels Transmissionslicht zu bestimmen.

Im Dokument US 4,715,718 sind ein Verfahren und eine Vorrichtung zur Onlinebestimmung der Bindungsstärke zwischen mehreren laminierten Schichten mittels Elektromagnetischer Strahlung bekannt. Hierbei wird die Intensität von reflektiertem Licht bei zwei unterschiedlichen diffusen Reflexionswinkeln gemessen.

Im Dokument US 2005 / 0259326 A1 sind mehrschichtige optische Filme sowie hieraus gebildete Laminate und Karten offenbart, die im sichtbaren Bereich transparent sind.

### Zusammenfassung

Aufgabe der Erfindung ist es, ein Verfahren oder eine Vorrichtung zum zerstörungsfreien Bestimmen eines laminierten Zustands einer Anordnung von laminierten Kunststofffolienschichten für einen Kunststoffkartenkörper anzugeben.

Zur Lösung sind ein Verfahren und eine Vorrichtung zum zerstörungsfreien Bestimmen eines laminierten Zustands einer Anordnung von laminierten Kunststofffolienschichten für einen Kunststoffkartenkörper nach den unabhängigen Ansprüchen 1 und 9 geschaffen. Alternative Ausgestaltungen sind Gegenstand von abhängigen Unteransprüchen.

Die Messlichtquelle kann ein oder mehrere Lichtquellen aufweisen. Die Lichtquellen können einfarbiges Licht und / oder Mischlicht bis hin zum Weißlicht für die Messlichtstrahlen bereitstellen. Im Fall von mehreren Lichtquellen können diese auf einer oder gegenüberliegenden Seiten der Anordnung von laminierten Kunststofffolienschichten angeordnet sein. Die Detektoreinrichtung kann ein oder mehrere optische Detektoren aufweisen, die auf einer oder auf gegenüberliegenden Seiten der Anordnung von laminierten Kunststofffolienschichten angeordnet sein können. Es kann vorgesehen sein, dass ein und derselbe Detektor eingerichtet ist, Messsignale für mehrere optische Messparameter zu erfassen, zum Beispiel sowohl für das Bestimmen der Transmission wie auch für das Bestimmen der Reflexion.

Bei dem Bestimmen der Differenz zwischen den optischen Messparametern für die untersuchten Schichtanordnungen können Absolut- und / oder Relativgrößen für eine oder mehrere optische Messparameter verglichen werden. Das Bestimmen des mindestens einen optischen Messparameters kann einen oder mehrere Schritte der Signalverarbeitung und -auswertung umfassen, zum Beispiel das Bestimmen einer Ableitung (Differentialableitung).

Die als Referenz ausgewählte Schichtanordnung und die (aktuell) zu prüfende Schichtanordnung können den genau gleichen Schichtaufbau bezüglich der Kunststofffolienschichten aufweisen, sodass insbesondere die Folienmaterialien, die Schichtdicken, und deren Anordnung im Stapel gleich sein können. Alternativ können die Schichtanordnungen die gleichen Kunststofffolienschichten aufweisen, aber in unterschiedlicher Reihenfolge im Stapel.

Die Lamination der Kunststofffolienschichten erfolgt beispielsweise in einem bei der Herstellung von Sicherheitsdokumenten bekannten Heißpressverfahren, bei dem thermoplastische Kunststoffe unter erhöhten Temperaturen zusammengepresst werden, so dass ein Monoblock gebildet wird. Das Fügen der Schichten kann aber auch mittels Einsatz von Klebstoff oder mittels Kunststoffschweißen erfolgen.

Infolge des Laminierens kann der Stapel von Kunststofffolienschichten im Wesentlichen frei von inneren Grenzflächen ausgebildet sein.

Die ermittelte Laminierqualität kann als Maß für den Autohäsionsgrad (Grenzflächenfestigkeit) der Schichtanordnung verwendet werden.

Die zu prüfende Schichtanordnung kann ein Kunststoffkartenkörper mit einem Format für Identitätsdokumente, nämlich ID-1, ID-2 oder ID-3, nach ISO / IEC 7810 sein.

Es kann vorgesehen sein, dass Bestimmen des Transmissionsgrads mehrfach auszuführen, insbesondere für unterschiedliche Bereiche der Oberfläche der zu prüfenden Schichtanordnung, indem die Messlichtstrahlen in die unterschiedlichen Oberflächenbereiche nacheinander eingestrahlt werden. Die für die verschiedenen Bereiche so bestimmten optischen Messparameter können gemittelt und / oder verglichen werden. Insbesondere können auf diese Weise begrenzte Bereiche innerhalb der zu prüfenden Schichtanordnung ermittelt werden, in denen sich die Laminierqualität unterscheidet. Die Messlichtstrahlen können in frei wählbaren Abständen zwischen benachbarten Messbereichen auf der Oberfläche der Schichtanordnung über die Schichtanordnung scannen, sodass in einer Ausführungsform eine flächige Verteilung des optischen Messparameters über die untersuchte Fläche der zu prüfenden Schichtanordnung bestimmt werden kann. Wahlweise kann die so ermittelte flächige Verteilung mit einer zugeordneten flächigen Verteilung von optischen Messparametern für die als Referenz ausgewählte Schichtanordnung verglichen werden.

Das Verfahren kann die folgenden Schritte aufweisen: optisches Bestimmen einer als weitere Referenz ausgewählten Schichtanordnung mit den gestapelten Kunststofffolienschichten im nichtlaminierten Zustand, bei der die Kunststofffolienschichten nicht laminiert sind, wobei hierbei die Messlichtstrahlen auf die Schichtanordnung eingestrahlt und der Transmissionsgrad bestimmt wird; und Vergleichen der Differenz zwischen dem für die als Referenz ausgewählten Schichtanordnung bestimmten Transmissionsgrad und dem für die zu prüfende Schichtanordnung bestimmten Transmissionsgrad mit dem Transmissionsgrad für die als weitere Referenz ausgewählte Schichtanordnung. Die als weitere Referenz ausgewählte Schichtanordnung kann den gleichen Aufbau wie die zu prüfende Schichtanordnung aufweisen, wobei wahlweise die Anordnung der Kunststofffolienschichten in dem Stapel verschieden sein kann. Beim Untersuchen der zu prüfenden Schichtanordnung kann ein Vergleich mit den Messergebnissen für die Schichtanordnung im nichtlaminierten Zustand insbesondere Hinweise auf nicht ausreichend oder gar nicht laminierte Bereiche der zu prüfenden Schichtanordnung geben, da ein Prüfergebnis für solche Bereiche zumindest Ähnlichkeiten mit einem Stapel nicht laminierter Kunststofffolien zeigen kann.

Für die als weitere Referenz ausgewählte Schichtanordnung können der Transmissions- und / oder der Reflexionsgrad bestimmt werden.

Der Transmissionsgrad kann für eine oder mehrere unterschiedliche einfarbige Lichtwellenlängen jeweils bestimmt werden. Der mindestens eine optische Messparameter kann für eine einzelne Lichtwellenlänge oder für mehrere sich unterscheidende Lichtwellenlängen bestimmt werden, wobei vorgesehen sein kann, dass Bestimmen bei mehreren Lichtquellenlängen sowohl für die als Referenz ausgewählte Schichtanordnung wie auch die zu prüfende Schichtanordnung durchzuführen. Es kann vorgesehen sein, mit den unterschiedlichen Lichtwellenlängen in unterschiedlichen Oberflächenbereichen der zu prüfenden Schichtanordnung das Bestimmen des optischen Parameters, welcher die Laminierqualität anzeigt, auszuführen. Unterschiedlich farbiges Licht kann für unterschiedliche Bereiche der Schichtanordnung zum Einsatz kommen, beispielweise zur Berücksichtigung unterschiedlicher Lichttransmission in verschiedenen Bereichen, zum Beispiel wegen bestehender Materialunterschiede in den Bereichen.

Alternativ oder ergänzend zu einfarbigem Licht kann Mischlicht zum Messen auf die jeweilige Schichtanordnung eingestrahlt werden, beispielsweise Weißlicht.

Aus dem Transmissionsgrad für die Schichtanordnungen kann jeweils ein Hazewert bestimmt werden. Der Hazewert ist ein Maß für die Trübung von lichttransparenten Gegenständen und ist aktuell zum Beispiel in der Norm ASTM D 1003 beschrieben.

Vor dem optischen Bestimmen können die gestapelten Kunststofffolienschichten der zu prüfenden Schichtanordnung in einem nichtlaminierten Zustand als in Durchsicht jeweils trübe Kunststofffolienschichten aus Polycarbonat bereitgestellt und laminiert werden, derart, dass ein Monoblock aus laminierten Kunststofffolienschichten hergestellt wird.

Die zu prüfende Schichtanordnung mit den gestapelten Kunststofffolienschichten kann im laminierten Zustand ein für die Messlichtstrahlen wenigstens teiltransparentes Prüffenster aufweisen, in welches die Messlichtstrahlen eingestrahlt werden. Andere Bereiche der zu prüfenden Schichtanordnung können in geringerem Umfang oder gar nicht lichttransparent sein.

In Verbindung mit der Vorrichtung zum zerstörungsfreien Bestimmen eines laminierten Zustands einer Anordnung von laminierten Kunststofffolienschichten für einen Kunststoffkartenkörper gelten die vorangehend im Zusammenhang mit den verschiedenen Ausgestaltungen des Verfahrens gemachten Erläuterungen entsprechend.

Die Vorrichtung zum zerstörungsfreien Bestimmen der laminierten Schichtanordnung kann Teil einer Herstellungsvorrichtung zum Herstellen von Kunststoffkartenkörpern sein, beispielweise von Chipkarten oder Identitätskarten mit oder ohne Chip. Nach dem Laminieren der Kunststofffolienschichten kann der laminierte Körper bestimmt werden, um so zu prüfen, ob der laminierte Kunststoffkartenkörper dem weiteren Fertigungsprozess übergeben werden kann, was der Fall ist, wenn die vorher bestimmten Prüfkriterien für die optische Prüfung erfüllt werden. Andernfalls kann der laminierte Körper aus der Fertigungsstrecke entnommen werden (Ausschuss).

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vorrichtung zum zerstörungsfreien Bestimmen einer laminierten Schichtanordnung für einen Körper einer Kunststoffkarte;
- Fig. 2: eine schematische Darstellung zu den optischen Messgrößen Reflexion und Transmission an einer Schichtanordnung mit gestapelten Kunststofffolienschichten im laminierten Zustand;
- Fig. 3: eine schematische Darstellung zu den optischen Messgrößen Reflexion und Transmission an einer Schichtanordnung mit gestapelten Kunststofffolienschichten im laminierten Zustand, wobei Fehlstellen in der Schichtanordnung vorhanden sind;
- Fig. 4: eine schematische Darstellung zu den optischen Messgrößen Reflexion und Transmission für eine Schichtanordnung mit gestapelten Kunststofffolienschichten im nichtlaminierten Zustand; und
- Fig. 5: eine schematische Darstellung einer weiteren Vorrichtung zum zerstörungsfreien Bestimmen einer laminierten Schichtanordnung für einen Körper einer Kunststoffkarte.

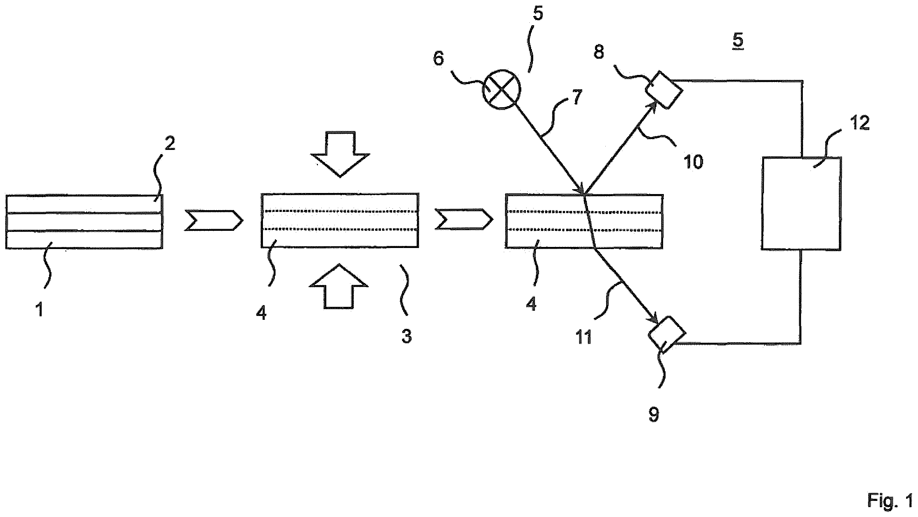

Fig. 1 zeigt eine schematische Darstellung, bei der eine Schichtanordnung 1 mit gestapelten Kunststofffolienschichten 2 im nichtlaminierten Zustand einer Arbeitsstation 3 zugeführt wird, um einer Schichtanordnung 4 der Kunststofffolienschichten 2 im laminierten Zustand herzustellen. Die so hergestellte Schichtanordnung 4 mit den Kunststofffolienschichten 2 im laminierten Zustand wird dann einer optischen Messvorrichtung 5 zugeführt, mit der die Schichtanordnung 4 mit den Kunststofffolienschichten 2 im laminierten Zustand als Prüfling optisch bestimmt wird.

Die Lamination der Kunststofffolienschichten 2 erfolgt beispielsweise in einem bei der Herstellung von Sicherheitsdokumenten bekannten Heißpressverfahren, bei dem thermoplastische Kunststoffe unter erhöhten Temperaturen zusammengepresst werden, so dass ein Monoblock gebildet wird. Das Fügen der Schichten kann aber auch mittels Einsatz von Klebstoff oder mittels Kunststoffschweißen erfolgen. Infolge des Laminierens kann Schichtanordnung 4 der Kunststofffolienschichten 2 im Wesentlichen frei von inneren Grenzflächen ausgebildet sein.

Beim optischen Bestimmen werden von einer Messlichtquelle 6 erzeugte Messlichtstrahlen 7 auf die Schichtanordnung 4 eingestrahlt. Mithilfe einer ersten und zweiten Detektoreinrichtung 8, 9 werden reflektierte Messlichtstrahlen 10 und transmittierte Messlichtstrahlen 11 erfasst. Zugehörige Messsignale werden an eine Auswerteinrichtung 12 gegeben, die eingerichtet ist, wenigstens einen optischen Messparameter aus den Messsignalen zu bestimmen, beispielsweise einen Transmissionsgrad und / oder einen Reflexionsgrad für den untersuchten Prüfling.

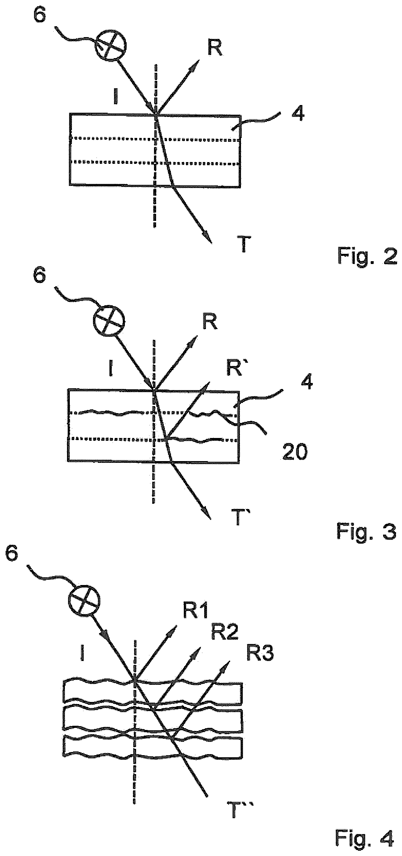

Mit der optischen Messvorrichtung 5 können unterschiedliche Schichtanordnungen jeweils optisch bestimmt werden, um danach mithilfe der Auswerteeinrichtung 12 einen oder mehrere optische Messparameter für die untersuchten Schichtanordnungen zu vergleichen. In einer Ausgestaltung ist vorgesehen, zunächst eine Schichtanordnung mit gestapelten Kunststofffolienschichten im laminierten Zustand als Referenz optisch zu bestimmen. Hierbei werden für die als Referenz dienende Schichtanordnung ein Transmissionsgrad T und ein Reflexionsgrad R als Absolut- und / oder Relativgrößen bestimmt. Für diese optischen Messparameter gilt: I=R+T, wobei I die Lichtintensität der einfallenden Messlichtstrahlen 7 angibt. Dieser Gleichung liegt die Annahme zugrunde, dass in dem untersuchten Prüfling keine Absorption der Messlichtstrahlen 7 stattfindet. Diese Messsituation ist schematisch in Fig. 2 gezeigt.

Die für die als Referenz ausgewählte Schichtanordnung gewonnenen optischen Messparameter können mit gleichen optischen Messparametern für die Schichtanordnung 4 (Prüfling) verglichen werden. Für deren Bestimmung ist eine Messsituation schematisch in Fig. 2, 3 gezeigt. An Defekten oder Fehlstellen 20 innerhalb der Schichtanordnung 4 kommt es zur Lichtreflexion, sodass sich folgendes ergibt: I=R+R'+T", woraus folgt: T'=T-R'. Im Unterschied zur Ausgangssituation nach Fig. 2, welche eine ideale Schichtanordnung von laminierten Kunststofffolien betrifft, bei denen im Schichtstapel die Reflexion minimiert ist oder gar nicht stattfindet, ergibt sich aufgrund der Fehlstellen 20 ein geändertes optisches Verhalten, welches indikativ ist für die Laminierqualität innerhalb der untersuchten Schichtanordnung.

Liegt die Differenz von T und T' innerhalb einer vorgegebenen Fehlertoleranz oder ist etwa Null, liegt eine Schichtanordnung von laminierten Kunststofffolienschichten vor, die für einen Körper einer Kunststoffkarte geeignet ist. Andernfalls ist die Schichtanordnung 4 als Ausschuss zu qualifizieren. Das entsprechende Prüfergebnis kann in der Auswerteeinrichtung 12 über eine Anzeige ausgegeben werden.

Alternativ oder ergänzend können die optischen Messparameter, insbesondere Reflexion und / oder Transmission, für eine Schichtanordnung der Kunststofffolien 2 im nichtlaminierten Zustand bestimmt werden. Die zugehörige Messsituation ist schematisch in Fig. 4 gezeigt. Es ergibt sich folgendes: I=R1+R2+R3+T". Jede der Kunststofffolien 2 trägt zum reflektierten Licht bei. Insgesamt gilt sodann: T"<T'<T.

Für den Fall T"=T-T' ist bei der Messsignalauswertung zuschlussfolgern, dass in dem untersuchten Bereich der Schichtanordnung 4 eine Lamination nicht erfolgt ist. Gilt T"<T-T', ist auf nicht laminierte Bereich in der Schichtanordnung 4 zu schließen.

Mit dem beschriebenen Verfahren kann der Autohäsionsgrad für die laminierten Kunststofffolienschichten zerstörungsfrei bestimmt werden, was weiterhin als Maß für die Grenzflächenfestigkeit in dem Stapel der Kunststofffolienschichten verwendet werden kann.

In der Auswerteeinrichtung 12 können vor dem Prüfen der Schichtanordnung 4 mit den gestapelten Kunststofffolienschichten 2 im laminierten Zustand für die zu messenden optischen Messparameter ein oder mehrere Referenzwerte hinterlegt werden, insbesondere in einem elektronischen Speichermedium. Je nach Prüfaufgabe kann einer der Referenzwerte ausgewählt werden, beispielsweise in Abhängigkeit vom Aufbau der Schichtanordnung (Anzahl und Dicke der Kunststofffolienschichten).

Die Kunststofffolienschichten 2 können beispielsweise als Polycarbonatfolien ausgebildet sein. Vor dem Laminierprozess besitzen diese und andere Kunststofffolien eine natürliche Oberflächenrauigkeit, weshalb solche Kunststofffolien in der Durchsicht dann als "trüb" erscheinen. Die Trübheit einer Kunststofffolienschicht bei einer Lichtwellenlänge wird beispielsweise durch seinen Hazewert beschrieben, der zum Beispiel gemäß der Norm ASTM D 1003 bestimmt werden kann.

Werden die Folien in der beschriebenen Art und Weise laminiert, verschwinden beim Laminieren die Grenzflächen zwischen den Kunststofffolien aufgrund plastischer Verformung der Oberflächen und der Autohäsion vom Polycarbonatketten über Grenzflächen hinweg. Eine ideal laminierte Schichtanordnung weist daher im Wesentlichen keine physikalischen Grenzflächen mehr auf. Die Quelle der diffusen Lichtstreuung (Oberflächenrauigkeit) wird durch das Laminieren zumindest verringert. Hierdurch wird die Lichttransmission bei Wellenlängen, bei denen die Schichtanordnung im Wesentlichen keine Absorption aufweist, deutlich erhöht, was den Hazewert verringert.

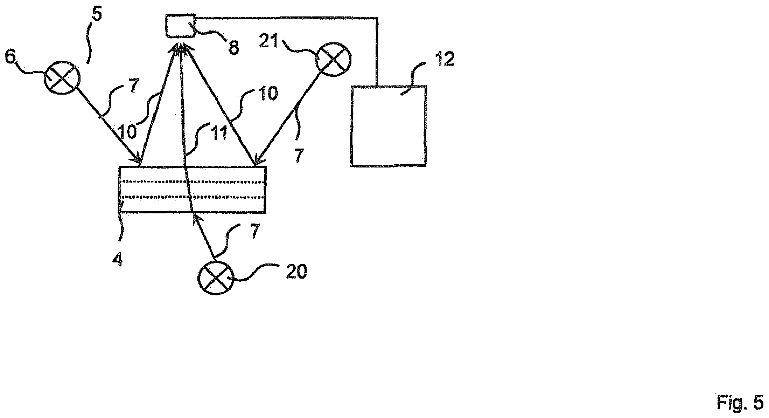

Fig. 5 zeigt eine schematische Darstellung einer weiteren Vorrichtung zum zerstörungsfreien Bestimmen einer Schichtanordnung 4 der Kunststofffolienschichten 2 im laminierten Zustand. Für gleiche Merkmale werden dieselben Bezugszeichen wie in Fig. 1 verwendet. Im Unterschied zur Vorrichtung in Fig. 1 sind weitere Lichtquellen 20, 21 vorgesehen, die auf gegenüberliegenden Seiten der Schichtanordnung 4 angeordnet sind. Die Messlichtstrahlen 10, 11 werden gemeinsam von der Detektoreinrichtung 8 empfangen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungsformen von Bedeutung sein.

## Patentansprüche

1. Verfahren zum zerstörungsfreien Bestimmen eines laminierten Zustands einer Anordnung (4) von laminierten Kunststofffolienschichten für einen Kunststoffkartenkörper, wobei das Verfahren die folgenden Schritte umfasst:
- optisches Bestimmen einer als Referenz ausgewählten Schichtanordnung mit gestapelten Kunststofffolienschichten im laminierten Zustand, bei der die Kunststofffolienschichten einem Mindeststandard genügend laminiert sind, insbesondere frei von nichtlaminierten Bereichen; und
- optisches Bestimmen einer Laminierqualität für eine zu prüfenden Schichtanordnung (4) mit den gestapelten Kunststofffolienschichten (2) im laminierten Zustand, in welcher die Kunststofffolienschichten (2) laminiert sind;
wobei
- bei dem optischen Bestimmen mittels Messlichtstrahlen (7), die von einer Messlichtquelle (6) bereitgestellt und die auf die jeweilige Schichtanordnung eingestrahlt werden, für die Schichtanordnung jeweils der Transmissionsgrad bestimmt wird;
- die zu prüfende Schichtanordnung (4) als nutzbarer Kunststoffkartenkörper bestimmt wird, wenn eine Differenz zwischen dem für die als Referenz ausgewählte Schichtanordnung bestimmten Transmissionsgrad und dem für die zu prüfende Schichtanordnung (4) bestimmten Transmissionsgrad, welcher die Laminierqualität anzeigt, innerhalb einer vorgegeben Toleranzgrenze für den Transmissionsgrad liegt; und
- andernfalls die zu prüfende Schichtanordnung (4) mit den gestapelten Kunststofffolienschichten (2) im laminierten Zustand als Ausschuss bestimmt wird.

2. Verfahren nach Anspruch 1, **gekennzeichnet durch** die folgenden Schritte:
- optisches Bestimmen einer als weitere Referenz ausgewählten Schichtanordnung mit den gestapelten Kunststofffolienschichten im nichtlaminierten Zustand, bei der die Kunststofffolienschichten nicht laminiert sind, wobei hierbei die Messlichtstrahlen auf die Schichtanordnung eingestrahlt und der Transmissionsgrad bestimmt werden; und
- Vergleichen der Differenz zwischen dem für die als Referenz ausgewählten Schichtanordnung bestimmten Transmissionsgrad und dem für die zu prüfende Schichtanordnung (4) bestimmten Transmissionsgrad mit dem Transmissionsgrad für die als weitere Referenz ausgewählte Schichtanordnung.

3. Verfahren nach Anspruch 2, **dadurch gekennzeichnet, dass** für die als weitere Referenz ausgewählte Schichtanordnung der Transmissions- und / oder der Reflexionsgrad bestimmt werden.

4. Verfahren nach mindestens einem der vorangehenden Ansprüche, **dadurch gekennzeichnet, dass** der Transmissionsgrad für eine oder mehrere unterschiedliche einfarbige Lichtwellenlängen jeweils bestimmt wird.

5. Verfahren nach mindestens einem der vorangehenden Ansprüche, **dadurch gekennzeichnet, dass** der optische Messparameter für eine Mischung mehrerer Lichtwellenlängen bestimmt wird.

6. Verfahren nach mindestens einem der vorangehenden Ansprüche, **dadurch gekennzeichnet, dass** aus dem Transmissionsgrad für die Schichtanordnungen jeweils ein Hazewert bestimmt wird.

7. Verfahren nach mindestens einem der vorangehenden Ansprüche, **dadurch gekennzeichnet, dass** vor dem optischen Bestimmen die gestapelten Kunststofffolienschichten (2) der zu prüfenden Schichtanordnung (4) in einem nichtlaminierten Zustand als in Durchsicht jeweils trübe Kunststofffolienschichten aus Polycarbonat bereitgestellt und laminiert werden, derart, dass ein Monoblock aus laminierten Kunststofffolienschichten hergestellt wird.

8. Verfahren nach mindestens einem der vorangehenden Ansprüche, **dadurch gekennzeichnet, dass** die zu prüfende Schichtanordnung (4) mit den gestapelten Kunststofffolienschichten (2) im laminierten Zustand ein für die Messlichtstrahlen (7) wenigstens teiltransparentes Prüffenster aufweist, in welches die Messlichtstrahlen (7) eingestrahlt werden.

9. Vorrichtung zum zerstörungsfreien Bestimmen eines laminierten Zustands einer Anordnung (4) von laminierten Kunststofffolienschichten für einen Kunststoffkartenkörper, mit
- einer optischen Messeinrichtung (5), die eine Messlichtquelle (6), die eingerichtet ist, Messlichtstrahlen (7) bereitzustellen, und eine Detektoreinrichtung (8, 9) aufweist, die eingerichtet ist, Messsignale für transmittierte Messlichtstrahlen (11) und / oder reflektierte Messlichtstrahlen (10) zu erfassen; und
- einer Auswerteinrichtung (12), die an die Messeinrichtung (5) koppelt und **dadurch gekennzeichnet ist, dass** die Auswerteinrichtung (12) eingerichtet ist, aus den Messsignalen einen Transmissionsgrad zu bestimmen und auszuwerten;
wobei die optische Messeinrichtung (5) und die Auswerteinrichtung (12) eingerichtet sind,
- eine als Referenz ausgewählte Schichtanordnung mit gestapelten Kunststofffolienschichten im laminierten Zustand optisch zu bestimmen, bei der die Kunststofffolienschichten einem Mindeststandard genügend laminiert sind, insbesondere frei von nichtlaminierten Bereichen;
- eine zu prüfende Schichtanordnung (4) mit den gestapelten Kunststofffolienschichten (2) im laminierten Zustand, in welchem die Kunststofffolienschichten (2) laminiert sind, optisch zu bestimmen;
- beim optischen Bestimmen einer Laminierqualität mittels der Messlichtstrahlen (7), die von der Messlichtquelle (6) auf die jeweilige Schichtanordnung eingestrahlt werden, für die Schichtanordnung jeweils den Transmissionsgrad zu bestimmen;
- die zu prüfende Schichtanordnung (4) als nutzbaren Kunststoffkartenkörper zu bestimmen, wenn eine Differenz zwischen dem für die als Referenz ausgewählte Schichtanordnung (4) bestimmten Transmissionsgrad, welcher die Laminierqualität anzeigt, und dem für die zu prüfende Schichtanordnung bestimmten Transmissionsgrad innerhalb einer vorgegeben Toleranzgrenze für den Transmissionsgrad liegt; und
- andernfalls die zu prüfende Schichtanordnung (4) mit den gestapelten Kunststofffolienschichten (2) im laminierten Zustand als Ausschuss zu bestimmen.

## Claims

1. A method for the non-destructive analysis of a laminated state of an arrangement (4) of laminated plastic film layers for a plastic card body, wherein the method comprises the following steps:
- optically analysing a layer arrangement, which is selected as reference, with stacked plastic film layers in the laminated state, in which the plastic film layers are laminated in a manner satisfying a minimum standard, in particular in a manner free from non-laminated regions; and
- optically analysing a laminating quality for a layer arrangement (4) to be tested, with the stacked plastic film layers (2) in the laminated state, in which the plastic film layers (2) are laminated;
wherein
- during the optical analysis by means of measuring light beams (7), which are provided by a measuring light source (6) and which are shone onto the respective layer arrangement, the transmittance is determined for the layer arrangement in each case;
- the layer arrangement (4) to be tested is defined as a usable plastic card body if a difference between the transmittance determined for the layer arrangement selected as reference and the transmittance determined for the layer arrangement (4) to be tested, which indicates the laminating quality, lies within a predetermined tolerance limit for the transmittance; and
- otherwise, the layer arrangement (4) to be tested with the stacked plastic film layers (2) in the laminated state is defined as scrap.

2. The method according to Claim 1, **characterized by** the following steps:
- optically analysing a layer arrangement, which is selected as a further reference, with the stacked plastic film layers in the non-laminated state, in which the plastic film layers are not laminated, wherein the measuring light beams are here shone onto the layer arrangement and the transmittance is determined; and
- comparing the difference between the transmittance determined for the layer arrangement selected as reference and the transmittance determined for the layer arrangement (4) to be tested with the transmittance for the layer arrangement selected as further reference.

3. The method according to Claim 2, **characterized in that** the transmittance and / or reflectance are determined for the layer arrangement selected as further reference.

4. The method according to at least one of the preceding claims, **characterized in that** the transmittance for one or more different single-colour light wavelengths is determined in each case.

5. The method according to at least one of the preceding claims, **characterized in that** the optical measuring parameter is determined for a mixture of a plurality of light wavelengths.

6. The method according to at least one of the preceding claims, **characterized in that** a haze value is determined from the transmittance for the layer arrangements in each case.

7. The method according to at least one of the preceding claims, **characterized in that** prior to the optical analysis, the stacked plastic film layers (2) of the layer arrangement (4) to be tested are provided in a non-laminated state as plastic film layers made from polycarbonate which are respectively cloudy when looked through and are laminated, in such a manner that a monobloc made from laminated plastic film layers is produced.

8. The method according to at least one of the preceding claims, **characterized in that** the layer arrangement (4) to be tested with the stacked plastic film layers (2) in the laminated state has an at least partially transparent test window for the measuring light beams (7), into which test window the measuring light beams (7) are shone.

9. A device for the non-destructive analysis of a laminated state of an arrangement (4) of laminated plastic film layers for a plastic card body, having
- an optical measuring device (5), which has a measuring light source (6), which is set up to provide measuring light beams (7), and a detector device (8, 9), which is set up to detect measuring signals for transmitted measuring light beams (11) and / or reflected measuring light beams (10); and
- an evaluation device (12), which couples to the measuring device (5) and is **characterized in that** the evaluation device (12) is set up to determine and evaluate a transmittance from the measuring signals;
wherein the optical measuring device (5) and the evaluation device (12) are set up
- to optically analyse a layer arrangement, which is selected as reference, with stacked plastic film layers in the laminated state, in which the plastic film layers are laminated in a manner satisfying a minimum standard, in particular in a manner free from non-laminated regions;
- to optically analyse a layer arrangement (4) to be tested, with the stacked plastic film layers (2) in the laminated state, in which the plastic film layers (2) are laminated;
- to determine the transmittance for the layer arrangement in each case, during the optical analysis of a laminating quality by means of measuring light beams (7), which are shone by the measuring light source (6) onto the respective layer arrangement;
- to define the layer arrangement (4) to be tested as a usable plastic card body if a difference between the transmittance determined for the layer arrangement (4) selected as reference, which indicates the laminating quality, and the transmittance determined for the layer arrangement to be tested lies within a predetermined tolerance limit for the transmittance; and
- otherwise, to define the layer arrangement (4) to be tested with the stacked plastic film layers (2) in the laminated state as scrap.

## Revendications

1. Procédé pour la détermination non destructive d'un état stratifié d'un agencement (4) de couches de film plastique stratifié pour un corps de carte en plastique, dans lequel le procédé comprend les étapes suivantes :
- la détermination optique d'un agencement de couches choisi comme référence avec des couches de film plastique empilées à l'état stratifié, dans lequel les couches de film plastique sont suffisamment stratifiées à une norme minimale, en particulier exemptes de zones non stratifiées ; et
- la détermination optique d'une qualité de stratification pour un agencement de couches à tester (4) avec les couches de film plastique empilées (2) à l'état stratifié, dans lequel les couches de film plastique (2) sont stratifiées,
dans lequel
- lors de la détermination optique au moyen de faisceaux de lumière de mesure (7), qui sont fournis par une source de lumière de mesure (6) et sont irradiés sur l'agencement de couches respectif, la transmittance est déterminée pour chaque agencement de couches ;
- l'agencement de couches à tester (4) est déterminé comme un corps de carte plastique utilisable s'il existe une différence entre la transmittance déterminée pour l'agencement de couches sélectionné comme référence et la transmittance déterminée pour l'agencement de couches (4) à tester, ce qui indique la qualité de stratification, dans les limites de tolérance spécifiées pour la transmittance ; et
- sinon, l'agencement des couches (4) à tester avec les couches de film plastique empilées (2) est déterminé à l'état stratifié en tant que rejets.

2. Procédé selon la revendication 1, **caractérisé par** les étapes suivantes :
- la détermination optique d'un agencement de couches choisi comme référence supplémentaire avec les couches de film plastique empilées à l'état non stratifié, dans lequel les couches de film plastique ne sont pas stratifiées, dans lequel ici les faisceaux de lumière de mesure sont irradiés sur l'agencement de couches et la transmittance est déterminée ; et
- la comparaison de la différence entre la transmittance déterminée pour l'agencement de couches choisi comme référence et la transmittance déterminée pour l'agencement de couches (4) à tester avec la transmittance pour l'agencement de couches choisi comme référence supplémentaire.

3. Procédé selon la revendication 2, **caractérisé en ce que** la transmittance et / ou la réflectance sont déterminées pour l'agencement des couches choisi comme référence supplémentaire.

4. Procédé selon au moins une des revendications précédentes, **caractérisé en ce que** la transmittance pour une ou plusieurs longueurs d'onde lumineuses monocolores différentes est déterminée dans chaque cas.

5. Procédé selon au moins une des revendications précédentes, **caractérisé en ce que** le paramètre de mesure optique est déterminé pour un mélange de plusieurs longueurs d'onde lumineuses.

6. Procédé selon au moins une des revendications précédentes, **caractérisé en ce qu'**une valeur de haze est déterminée à partir de la transmittance pour les agencements de couches dans chaque cas.

7. Procédé selon au moins une des revendications précédentes, **caractérisé en ce qu'**avant la détermination optique, les couches de film plastique empilées (2) de l'agencement de couches (4) à tester dans un état non stratifié sont fournies et stratifiées comme des couches de film plastique en polycarbonate qui sont chacune troubles à la vue, de manière à produire un monobloc de couches de film plastique stratifiées.

8. Procédé selon au moins une des revendications précédentes, **caractérisé en ce que** l'agencement des couches à tester (4) avec les couches de film plastique empilées (2) à l'état stratifié présentent une fenêtre de contrôle au moins partiellement transparente pour les faisceaux de lumière de mesure (7) et dans lequel les faisceaux de lumière de mesure (7) sont émis.

9. Dispositif pour la détermination non destructive d'un état stratifié d'un agencement (4) de couches de film plastique stratifié pour un corps de carte en plastique, comportant
- un dispositif de mesure optique (5), qui présente une source de lumière de mesure (6) qui est configurée pour fournir des faisceaux de lumière de mesure (7), et un dispositif détecteur (8, 9), qui est configuré pour acquérir des signaux de mesure pour des faisceaux de lumière de mesure transmis (11) et / ou des faisceaux de lumière de mesure réfléchis (10) ; et
- un dispositif d'évaluation (12) qui est couplé au dispositif de mesure (5) et **caractérisé en ce que** le dispositif d'évaluation (12) est configuré pour déterminer et évaluer une transmittance à partir des signaux de mesure ;
dans lequel le dispositif de mesure optique (5) et le dispositif d'évaluation (12) sont configurés pour :
- déterminer optiquement un agencement de couches choisi comme référence avec des couches de film plastique empilées à l'état stratifié, dans lequel les couches de film plastique sont suffisamment stratifiées à une norme minimale, en particulier exemptes de zones non stratifiées ;
- déterminer optiquement un agencement de couches à tester (4) avec les couches de film plastique empilées (2) dans l'état stratifié, dans lequel les couches de film plastique (2) sont stratifiées ;
- lors de la détermination optique d'une qualité de stratification au moyen des faisceaux de lumière de mesure (7), qui sont irradiés de la source de lumière de mesure (6) sur l'agencement de couches respectif, déterminer la transmittance pour l'agencement de couches dans chaque cas ;
- déterminer l'agencement de couches (4) à tester en tant que corps de carte plastique utilisable, si une différence entre la transmittance déterminée pour l'agencement de couches (4) sélectionné comme référence, qui indique la qualité de stratification, et la transmittance déterminée pour l'agencement de couches à tester est dans une limite de tolérance spécifiée pour la transmittance ; et
- sinon, déterminer l'agencement de couches (4) à tester avec les couches de film plastique empilées (2) à l'état stratifié en tant que rejets.
